# EUROPÄISCHE PATENTANMELDUNG

(11) **EP 1 652 491 A1**
(43) Veröffentlichungstag der Anmeldung: **03.05.2006**
(21) Anmeldenummer: 05108561.1
(22) Anmeldetag: 16.09.2005
(51) Int. Cl.: A61C 13/00

(54) **Verfahren zum Herstellen eines dentalen Modells, sowie eines Dentalformteils, dentales Modell, sowie Verwendung eines 3D-Druckers und eines Kits**

(30) Priorität: 28.10.2004 DE 102004052364
(71) Anmelder: BEGO Bremer Goldschlägerei Wilh. Herbst GmbH & Co. KG, 28359 Bremen (DE)
(72) Erfinder: Dierkes, Stephan, 28195, Bremen (DE); Wiest, Thomas, 36088, Hünfeld (DE)
(74) Vertreter: Eisenführ, Speiser & Partner

(57) **Zusammenfassung**

Die Erfindung betrifft ein Verfahren zum Herstellen eines dentalen Modells (24). Die Erfindung betrifft des Weiteren ein so herstellbares dentales Modell, ggf. mit einer darauf abgeschiedenen Keramikschicht, ein Verfahren zur Herstellung eines Dentalformteils, die Verwendung eines 3D-Druckers und die Verwendung eines Kits.

Erfindungsgemäß werden für das Verfahren die Schritte vorgeschlagen: (a) Bereitstellen eines oder mehrerer fluider, verfestigbarer Materialien sowie einer oder mehrerer elektrisch leitfähiger Substanzen und (b) Herstellen des dentalen Modells (24) durch Rapid Prototyping unter Verwendung des oder der fluiden, verfestigbaren Materialien und der einen oder der mehreren elektrisch leitfähigen Substanzen, so dass das hergestellte dentale Modell in einem oder mehreren Bereichen (26, 28, 30) seiner Oberfläche elektrisch leitfähig ist.

## Beschreibung

Die Erfindung betrifft ein Verfahren zum Herstellen eines dentalen Modells. Die Erfindung betrifft des Weiteren ein dentales Modell, umfassend ein oder mehrere verfestigte Materialien, sowie in einem oder mehreren Bereichen seiner Oberfläche eine oder mehrere elektrisch leitfähige Substanzen. Zusätzlich betrifft die Erfindung ein Verfahren zum Herstellen eines dentalen Modells mit darauf abgeschiedener Keramikschicht und ein Verfahren zum Herstellen eines Dentalformteils. Schließlich umfasst die Erfindung die Verwendung eines 3D-Druckers mit einem, zwei oder mehr Drucksystemen und die Verwendung eines Kits.

Bekannt ist, dentale Modelle durch Abformen eines Abdrucks herzustellen. Dazu wird zunächst mittels einer aushärtbaren Abformmasse ein Abdruck vom Mundraum des Patienten genommen. Dieser Abdruck wird anschließend mit Gips ausgefüllt und aus diesem Abdruck ein sogenanntes Meistermodell hergestellt. Mittels dieses Meistermodells wird üblicherweise durch das sogenannte Duplieren ein Arbeitsmodell hergestellt, das als Vorlage für eine herzustellende Zahnrestauration, also den Zahnersatz dient.

Der klassische Zahnersatz wird bis heute in der Regel im zahntechnischen Labor mit einem großen Anteil Handarbeit gefertigt. Neben Vollmetall- und Vollkeramik-Restaurationen herrscht vor allem ein Werkstoffverbund aus Metall und Keramik vor. Eine solche metallkeramische Krone oder Brücke besteht aus einem metallischen Gerüst und einer dem Zahn nachempfundenen, so genannten Verblendung aus einer oder mehreren Schichten einer Dentalkeramik. Das Käppchen wird so gefertigt, dass es mit dem verbliebenen Zahnstumpf bzw. einem etwaigen Implantat des Patienten verbunden werden kann. Die bei der Herstellung des Käppchens zum Einsatz kommenden Metalle haben Nachteile. So können sie infolge von Korrosionsphänomenen zu farblichen Veränderungen und auch zu körperlichen Unverträglichkeiten führen.

Aus diesem Grund werden vollkeramische Restaurationen eingesetzt, bei denen auch das Gerüst aus einer Keramik besteht. Hierzu werden mechanisch besonders belastbare Keramiken gewählt. In den letzten Jahren wurden für die Herstellung und Formgebung solcher vollkeramischer Restaurationen vermehrt Verfahren entwickelt, da es sich bei der Keramik um einen chemisch beständigen, korrosionsfesten und biokompatiblen Werkstoff handelt. Zur Herstellung von keramischen Zahnrestaurationen wie Kronen- und Brückengerüsten hat sich neben den bekannten handwerklichen Herstellungsmethoden des Aufschlickerns einer Keramikschicht mittels Pinsel, dem halbautomatisiertes Verfahren des definierten Destabilisieren eines Schlickers mit dem Fräsen ein industrielles Fertigungsverfahren herausgebildet.

Parallel dazu gibt es Entwicklungen, dass bekannte keramische Schichtbildungs-Verfahren, also das aufbauende Verfahren der elektrophoretischen Abscheidung, im Dentalbereich zu etablieren. Dabei wird ein Keramikschlicker auf einem Modell abgeschieden. Das Auftragen oder Abscheiden des Feststoffanteils eines keramischen Schlickers erfolgt auf einem Positivmodell eines Zahnstumpfs. Zum Material sowie der Bildung dieses Modells gibt es verschiedene Ansätze. So wird im Patent DE 101 15 820 A1 ein Positiv aus einem bei thermischer Behandlung expandierendem Wachs über das Abgießen einer Negativform erzeugt.

Um die Herstellung von Keramikkäppchen, aber auch von Vollkeramikdentalformteilen zu beschleunigen und menschliche Arbeitskraft einzusparen, wird in der DE 101 15 820 A1 vorgeschlagen, zunächst durch digitales Scannen einen Datensatz zu erzeugen. Aus diesem Datensatz wird anschließend das entsprechende dentale Modell hergestellt, indem eine Kunststoffmonomerlösung mit Laserlicht polymerisiert wird (Stereolithographie). Im anderen Fall wird der Datensatz verwendet, um über das Fräsen von Gips ein entsprechendes Modell zu erzeugen. Anschließend wird von Hand auf Teile der Oberfläche ein Silberlack aufgebracht und diese so leitfähig gemacht. Die leitfähigen Teile der Oberfläche des dentalen Modells werden nachfolgend elektrisch kontaktiert. Anschließend wird in Flüssigkeit dispergiertes keramisches Pulver mit Hilfe eines elektrischen Feldes auf dem dentalen Modell abgeschieden. Der auf diese Weise erhaltene keramische Körper wird schließlich zu einem Keramikgerüst dichtgesintert. Alternativ, aber auch additiv, wird er zunächst ohne Geometrieänderung angesintert.

Nachteilig bei diesem Verfahren ist, dass sich keine geschlossene Fertigungskette ergibt, die ohne menschlichen Eingriff auskommt. So muss das durch Laserpolymerisation oder Fräsen von Gips gewonnene dentale Modell dem entsprechenden Gerät entnommen und von Hand mit leitendem Silberlack bestrichen werden. Das so präparierte dentale Modell muss anschließend für das elektrophoretische Abscheiden eines Schlickers vorbereitet werden.

Es ist Aufgabe der vorliegenden Erfindung solche menschlichen Eingriffe überflüssig zu machen oder zumindest deutlich zu reduzieren.

Die Aufgabe wird gemäß einem ersten Aspekt gelöst durch ein Verfahren zum Herstellen eines dentalen Modells mit folgenden Schritten:
- Bereitstellen eines oder mehrerer fluider, verfestigbarer Materialien (vorzugsweise mit einem Schmelzpunkt von unter 250 °C), sowie einer oder mehrerer elektrisch leitfähiger Substanzen und
- Herstellen des dentalen Modells durch Rapid Prototyping unter Verwendung des fluiden, verfestigbaren Materials oder der fluiden, verfestigbaren Materialien (vorzugsweise mit einem Schmelzpunkt von unter 250 °C) und der einen oder der mehreren elektrisch leitfähigen Substanzen, so dass das hergestellte dentale Modell (mit verfestigtem Material) in einem oder mehreren Bereichen seiner Oberfläche nunmehr elektrisch leitfähig ist.

Die Aufgabe wird gemäß einem zweiten Aspekt durch ein dentales Modell der eingangs genannten Art gelöst, das nach einem Verfahren gemäß einem der vorstehenden Ansprüche herstellbar ist.

Gemäß einem dritten Aspekt wird die Aufgabe gelöst durch ein Verfahren zum Herstellen eines dentalen Modells mit darauf abgeschiedener Keramikschicht, mit folgenden Schritten:
- Herstellen eines in einem oder mehreren Bereichen seiner Oberfläche elektrisch leitfähigen Modells durch Rapid Prototyping in einem erfindungsgemäßen Rapid-Prototyping-Verfahren (vorzugsweise in einer bevorzugten Ausgestaltung),
- elektrophoretisches und/oder elektrolytisches Abscheiden einer Keramikschicht auf einem oder mehreren elektrisch leitfähigen Bereichen der Oberfläche des hergestellten Modells.

Gemäß einem vierten Aspekt wird die Aufgabe gelöst durch ein Verfahren zum Herstellen eines Dentalformteils, mit folgenden Schritten:
- Herstellen eines dentalen Modells mit darauf abgeschiedener Keramikschicht nach einem erfindungsgemäßen Verfahren (vorzugsweise in einer bevorzugten Ausgestaltung, siehe unten)
- Bearbeiten des dentalen Modells mit darauf abgeschiedener Keramikschicht, so dass die Keramikschicht in ein Dentalformteil überführt wird.

Gemäß einem fünften Aspekt wird die Aufgabe gelöst durch die Verwendung eines 3D-Druckers mit einem, zwei oder mehr Drucksystemen, zum Ausdruck eines dentalen Modells, das ein oder mehrere verfestigte Materialien umfasst und das in einem oder mehreren Bereichen seiner Oberfläche eine oder mehrere elektrisch leitfähige Substanzen umfasst.

Gemäß einem sechsten Aspekt wird die Aufgabe gelöst durch die Verwendung eines Kits, umfassend ein oder mehrere (i) fluide, verfestigbare oder (ii) fluidisierbare und wiederverfestigbare Materialien und eine oder mehrere elektrisch leitfähige Substanzen zum Einsatz in einem erfindungsgemäßen Rapid-Prototyping-Verfahren (vorzugsweise in einer bevorzugten Ausgestaltung).

Ein Vorteil der Erfindung (in ihren verschiedenen Aspekten) ist, dass menschliche Arbeitskraft eingespart werden kann. So ist das dentale Modell bereits leitfähig und kann leicht mit Elektroden kontaktiert werden.

Ein weiterer Vorteil ist, dass auf das dentale Modell keine zusätzlichen Schichten, wie beispielsweise Graphit- oder Silberlack, aufgebracht werden müssen, so dass es nicht zu nachträglichen Änderungen der Geometrie des dentalen Modells kommt.

Zudem kann eine Herstellung durch Rapid Prototyping sehr schnell durchgeführt werden, sodass sich die Wartezeit des Patienten auf die Zahnrestauration deutlich verringert. Trotz der hohen Geschwindigkeit können mit Rapid Prototyping hohe Genauigkeiten erreicht werden. Entsprechend werden beim Endprodukt, also der Zahnrestauration bzw. dem Dentalformteil, hohe Formgenauigkeiten erreicht, was den Tragekomfort beim Patienten erhöht.

Schließlich sind die verwendeten Substanzen kostengünstig und es werden Rapid-Prototyping-Verfahren gut beherrscht, was in einer hohen Prozessstabilität resultiert.

Unter elektrisch leitfähigen Substanzen werden Substanzen mit einem spezifischen elektrischen Widerstand von unter 5x10² Ωm verstanden. Ein oder mehrere der einzusetzenden elektrisch leitfähigen Substanzen können mit einem oder mehreren der einzusetzenden fluiden, verfestigbaren Materialien identisch sein. Dies ist aber nicht immer der Fall.

Unter einem elektrisch leitfähigen Bereich der Oberfläche des Rapid-Prototyping-Modells wird ein abgegrenzter Raumbereich verstanden, der aus dem Gemisch oder aus Material besteht, das aus dem Gemisch durch Verfestigen hervorgegangen ist, und der einen spezifischen elektrischen Widerstand von unter 5x10² Ωm aufweist. Partikel aus elektrisch leitfähiger Substanz allein bilden damit keinen leitfähigen Bereich der Oberfläche.

Substanzen werden Substanzen mit einem spezifischen elektrischen Widerstand von unter 5x10² Ωm verstanden.

Unter fluiden Materialien werden Materialien verstanden, die bei gegebener Temperatur und gegebenem Druck eine Viskosität von unter 1000 Pas besitzen. Verfestigbar sind fluide Materialien insbesondere dann, wenn sie durch Erkalten, Verdampfen eines flüchtigen Bestandteils, Polymerisieren, Lichtaushärten, Abbinden oder Vernetzen in den festen Zustand überführt werden können.

Insbesondere gehören Stoffe, die bei 20 °C und 1013 hPa fest sind und bei erhöhter Temperatur (z.B. im Bereich von 50 °C bis 250 °C) und 1013 hPa eine Viskosität von unter 10 Pa·s aufweisen, bei dieser Temperatur und diesem Druck zu den fluiden, verfestigbaren Materialien. Sie (wieder- )erstarren beim Erkalten.

Bei Materialien, die keinen definierten Schmelzpunkt haben (z.B. bei mehrphasigen Substanzen), wird diejenige Temperatur als Schmelzpunkt betrachtet, bei der die Viskosität des Materials bei 1013 hPa 10 Pa·s unterschreitet. Es versteht sich, dass beim Bereitstellen des oder der fluiden, verfestigbaren Materialien von festen oder fluidisierbaren, wiederverfestigbaren Materialien ausgegangen werden kann, die fluidisiert werden.

Als Rapid Prototyping werden Verfahren betrachtet, die aus in einem Rechner gespeicherten Daten, welche die Geometrie eines Bauteils beschreiben, ein Bauteil mit den gleichen geometrischen Abmessungen erzeugen, ohne dass menschliches Eingreifen im Hinblick auf die Gestaltgebung notwendig ist.

Es kann unterschieden werden in abtragendes und additives Rapid Prototyping. Beim abtragenden Rapid Prototyping wird aus Vollmaterial Material abgetragen. Dies geschieht in der Regel durch Spanen, wie Schleifen oder Fräsen. Beim additiven Rapid Prototyping wird hingegen Material auf das entstehende Werkstück, hier: das entstehende dentale Modell, abgeschieden.

In bevorzugten Verfahren werden der Mischung noch ein oder mehrere Zusätze hinzugegeben. So kann der Mischung ein Dispergierhilfsmittel zugegeben werden, das über elektrostatische und/oder sterische Wechselwirkung die Homogenisierung und Stabilisierung der Partikel bewirkt. Darüber hinaus kann die Zugabe eines Benetzungsmittels vorgesehen sein, das die Zugabe des Pulvers in dem Fluid mit einer hohen Oberflächenspannung ermöglicht. Es können zudem Materialien verwendet werden, die als Verdicker oder Verdünner der Mischung dienen.

Bevorzugt ist im Rahmen der vorliegenden Erfindung ein Verfahren, bei dem das dentale Modell durch additives Rapid Prototyping hergestellt wird. Bevorzugte Formen des additiven Rapid Prototyping sind das 3D-Drucken, insbesondere das Inkjet-Printen, die Stereolithographie sowie das Fused Deposition Modeling (FDM). Bei Inkjet-Verfahren werden kleine Materialkügelchen flüssig aus einem Druckkopf abgegeben, die sich auf dem entstehenden Modell absetzen und dort erstarren (verfestigen). Beim Fused Deposition Modeling wird ein kontinuierlicher Kunststoff- oder Wachsdraht an-/ aufgeschmolzen und platziert (wiederverfestigt). Die Erzeugung von Bauteilen über die Stereolithographie erfolgt beispielsweise über das lagenweise Auftragen eines Photopolymers und dem anschließenden, selektiven Vernetzen des Polymers mittels UV-Licht.

Beim Inkjet-Printen handelt es sich um ein Verfahren bei dem zuvor aufgeheiztes Wachs bzw. Kunststoff (Thermoplast) oder ein Photopolymerharz den 3D-Drucker flüssig verlässt und auf dem Bauteil erstarrt. Das Inkjet Printen lässt sich unterscheiden durch die Anzahl der Düsen, aus denen Material abgegeben wird. So arbeiten beispielsweise die Geräte der Firma Solidscape Inc., U.S.A. und BPM Technology mit einer Düse (Single Jet, Ballistic Particle Manufacturing) und den Materialien Wachs und Thermoplast, wohingegen die Inkjet-Drucker von den Firmen 3D-Systems sowie von Objet Geometries Ltd. mit mehreren Düsen (Multi-Jet Modeling, Poly-Jet) ausgestattet sind und mit den Materialien Wachs und/oder Fotopolymerenharz arbeiten. Wobei die Systeme, die mit mehreren Düsen arbeiten, zur deutlich schnelleren Modellerzeugung führen.

Die bereits genannten Firmen bieten jeweils Geräte an, die mit zwei oder mehr Drückköpfen ausgestattet sind. Das erlaubt es, Rapid-Prototyping-Modelle aus mehreren Substanzen simultan oder nacheinander schichtweise aufzubauen. In der Praxis werden so beispielsweise Trägerstrukturen zur Unterstützung von Hinterschneidungen mit einem weiteren Material aufgebaut, das sich in seinen physikalischen Eigenschaften vom ansonsten verwendeten Material unterscheidet.

Bevorzugt ist, dass das fluide, verfestigbare Material oder die fluiden, verfestigbaren Materialien aus der Gruppe ausgewählt ist bzw. sind, die aus Wachs und Kunststoff (Thermoplast) besteht. Wird das dentale Modell auf Basis eines Materials aus fluidem, verfestigbarem Wachs oder Kunststoff mit einem Schmelzpunkt bzw. Schmelzbereich von unter 250 °C gefertigt, so lässt es sich vor oder bei einem gegebenenfalls anschließenden Sinterprozess einer auf das dentale Modell abgeschiedenen Schlickerschicht leicht durch Ausschmelzen entfernen. Beim Ausschmelzen nicht vollständig entfernte Wachs- bzw. Kunststoffreste lassen sich in der Regel rückstandsfrei verbrennen.

Für den Fall, dass Material keinen Schmelzpunkt bzw. Schmelzbereich besitzt, erfolgt ein Herauslösen durch Zersetzen bei Erreichen der Zersetzungstemperatur.

Das Herauslösen des Modells aus dem Gerüst kann beispielsweise aber auch durch Anlösen (Ätzen) erfolgen.

Vorzugsweise werden als elektrisch leitfähige Substanzen Graphit, Ruß und/oder Metallpartikel, insbesondere Silberpartikel, verwendet.

In einem bevorzugten Verfahren wird zumindest eine elektrisch leitfähige Substanz mit zumindest einem fluiden, verfestigbaren Material vor deren Verwendung beim Rapid Prototyping gemischt.

In einem alternativen bevorzugten Verfahren wird eine elektrisch leitfähige Substanz eingesetzt, die gleichzeitig fluid und verfestigbar ist.

Wird das InkJet-Printen mit zwei oder mehr Druckköpfen eingesetzt, so ist vorteilhaft, zumindest einen Druckkopf mit elektrisch leitfähiger Substanz und einen Druckkopf mit elektrisch nicht leitfähigem Material vorzusehen. Bereiche des dentalen Modells, die elektrisch nicht leitfähig sein sollen, werden dann aus dem nicht leitenden fluiden, verfestigbaren Material (mit Schmelzpunkt < 250 °C) gefertigt, wohingegen elektrisch leitfähige Bereiche aus dem elektrisch leitfähigen, fluiden, verfestigbaren Material gefertigt werden.

Bevorzugt ist ein Verfahren, bei dem das hergestellte dentale Modell in mindestens zwei gegeneinander elektrisch isolierten Bereichen seiner Oberfläche elektrisch leitfähig ist. Zwei Punkte gehören dann zum gleichen elektrischen leitfähigen Bereich der Oberfläche, wenn an dem einen Punkt kein elektrisches Potential angelegt werden kann, ohne dass der andere ebenfalls auf dem gleichen elektrischen Potential liegt. Wird an einem elektrisch leitfähigen Punkt der Oberfläche ein Potential angelegt, so gehören folglich alle Punkte, die auf dem gleichen elektrischen Potential liegen, zum gleichen elektrisch leitfähigen Bereich. Als gegeneinander elektrisch isoliert werden zwei Bereiche dann angesehen, wenn der Widerstand zwischen beiden größer ist als 100 kΩ.

Bevorzugt ist ein Verfahren, bei dem zumindest eine elektrisch leitfähige Substanz ein fluides, verfestigbares Material ist.

In einer vorteilhaften Ausgestaltung werden zum Rapid Prototyping geometrische Daten des dentalen Modells (Datenmodell) verwendet, die durch (a) intraorales Scannen oder (b) durch Scannen eines Meistermodells gewonnen werden. Unter einem Meistermodell wird der erste Positivabdruck verstanden. Dieser entsteht in der Regel durch Abformen des Negativs, das im Mund des Patienten abgenommen wird. Alternativ können die geometrischen Daten auch (c) durch Scannen eines Arbeitsmodells gewonnen werden. Ein Arbeitsmodell entsteht durch Abformen eines Meistermodells oder eines anderen Arbeitsmodells.

In einem bevorzugten Verfahren wird das Datenmodell vor dem Herstellen des dentalen Modells so verändert, dass ein überdimensioniertes dentales Modell resultiert, um die zu erwartende Dimensionsänderung eines durch Abformen des dentalen Modells entstehenden Dentalformteilrohlings während dessen Herstellungsprozess zu kompensieren.

Das dentale Modell (entsprechend der Verwendung eines Arbeitsmodells bei Verfahren nach dem Stand der Technik) wird verwendet, um daran die eigentliche Zahnrestauration, beispielsweise das Keramikkäppchen oder die Verblendung, anzuformen. In der weiteren Verarbeitung des Keramikkäppchens kommt es beim Sintern regelmäßig zum sogenannten Sinterschrumpf, d.h., dass während des Sinterns die geometrischen Abmessungen des entstehenden Keramikkäppchens abnehmen. Ein derartiger Sinterschrumpf kann bereits vor der Herstellung des dentalen Modells anhand des Datenmodells berechnet werden. Anschließend wird das Datenmodell so verändert, dass beispielsweise ein mit Hilfe dieses Datenmodells gefertigtes Keramikkäppchen trotz Sinterschrumpfs die ursprünglich gewollten geometrischen Abmessungen aufweist. Durch geeignete Simulation lässt sich auch ein ggf. anisotroper Sinterschrumpf kompensieren.

In einer vorteilhaften Ausgestaltung des erfindungsgemäßen Verfahrens wird das Datenmodell vor dem Erstellen des dentalen Modells auf Basis einer numerischen Berechnung der lokalen Versagenswahrscheinlichkeit eines durch Abformen des dentalen Modells entstehenden Dentalformteilrohlings, insbesondere durch eine FEM-Simulation, so verändert, dass eine vorgewählte lokale Versagenswahrscheinlichkeit an keinem Ort des entstehenden Dentalformteilrohlings überschritten wird. Ein mit Hilfe des dentalen Modells gefertigtes Keramikkäppchen ist nämlich im Einsatz, d.h. nach Einsetzen in das Gebiss des Patienten, großen Belastungen ausgesetzt. Hierzu gehören die mechanische Belastung durch das Kauen, so wie Temperaturwechselbelastungen. Um eine möglichst hohe Lebensdauer des Keramikkäppchens zu gewährleisten, wird die Belastung, die auf dieses wirkt, im Rechner simuliert. Zur Simulation kann beispielsweise die Finite-Element-Methode (FEM) die Finite-Volumen-Methode (FVM) oder ein ähnliches mathematisches Verfahren eingesetzt werden.

Mit Hilfe dieser Simulation wird ermittelt, an welchen Stellen des Keramikkäppchens mit einer besonders hohen Belastung zu rechnen ist. An diesen Stellen ist dann mit einer erhöhten Versagenswahrscheinlichkeit zu rechnen, wenn eine nicht angepasste Materialstärke verwendet wird. Durch Simulationsrechnung werden also zunächst Orte identifiziert, an denen ein Versagen des Keramikkäppchens am wahrscheinlichsten ist. Anschließend wird das Datenmodell so geändert, dass ein Keramikkäppchen, das mit dessen Hilfe (durch Abformen des aus dem Datenmodell gewonnenen Modells) hergestellt wird, an den entsprechenden Stellen eine geringere Versagenswahrscheinlichkeit aufweist. Gegebenenfalls werden die Schritte Simulation und Anpassung mehrfach durchlaufen.

In einer bevorzugten Ausführungsform wird das Datenmodell vor dem Herstellen des dentalen Modells so verändert, dass ein dentales Modell resultiert, das (i) an einer Stelle einen Vorsprung, insbesondere einen aus isolierendem Material bestehenden Vorsprung aufweist, die einer Stelle entspricht, an der das dentale Modell eine Präparationskante aufweist und/oder (ii) eine oder mehrere Ausnehmungen zur Aufnahme von Befestigungsmitteln zur Befestigung des dentalen Modells an einem Modellträger aufweist.

Die Präparationskante ist die Berandung des Dentalformteils, also insbesondere eines Käppchens oder einer Verblendung, die im Gebiss des Patienten in unmittelbarer Nähe des Zahnfleischs liegt und gegebenenfalls an dieses angrenzt. Aufgrund dieser Nähe zum Zahnfleisch muss die Präparationskante präzise präpariert werden. Durch das Vorsehen eines Vorsprungs wird die Zone, in der sich in einem nachfolgenden Arbeitsgang Schlicker abscheiden kann, so begrenzt, dass sich eine definierte Präparationskante ergibt.

Zusätzlich wird gegebenenfalls ein Zementspalt berücksichtigt, der zum Befestigen des Gerüsts auf dem Zahnstumpf oder dem Implantat im Mund des Patienten benötigt wird. Das Dentalmodell wird dann so verändert, dass ein dentales Modell resultiert, das auf der dem Zahnstumpf bzw. Implantat zugewandten Seite Raum für die Anordnung von Zahnzement lässt.

Um das dentale Modell für nachfolgende Arbeitsgänge auf einem Modellträger befestigen zu können, werden vorzugsweise entsprechende Ausnehmungen oder Erhebungen im dentalen Modell vorgesehen. Diese werden beispielsweise gewindet ausgeführt, sodass am Modellträger befestigte Schrauben direkt in das dentale Modell eingreifen können. Alternativ werden die entsprechenden Ausnehmungen gewindefrei vorgesehen, sodass am Modellträger befestigte Passstifte eingreifen können.

Bevorzugt ist zudem ein erfindungsgemäßes Verfahren, bei dem das hergestellte dentale Modell zur Erzeugung einer dreigliedrigen Brücke (für mehrgliedrige Brücken ist die Zahl der Zwischenstrukturelemente bzw. der vorhandenen Stützelemente entsprechend der zu ersetzenden, fehlenden Zähne zu erhöhen) umfasst: (i) zwei Stützstrukturelemente, die einen Abstand voneinander aufweisen, der dem Abstand zweier Zähne im Gebiss eines Patienten entspricht, zwischen denen ein (fehlender) Zahn zu überbrücken ist und (ii) zumindest ein zwischen den Stützstrukturelementen befindliches, frei tragendes Zwischen-Strukturelement, das gegebenenfalls mit den Stützstrukturelementen verbunden ist und das gegenüber den Stützstrukturelementen elektrisch isoliert ist.

Auf diese Weise wird ein dentales Modell erstellt, auf dem in nachfolgenden Arbeitsschritten das Gerüst oder die Verblendung für eine Brücke hergestellt werden. Auf den beiden Stützstrukturelementen werden in weiteren Verfahrensschritten die Käppchen aufgebaut. Die beiden Käppchen sind diejenigen Teile des dentalen Modells, die im Gebiss des Patienten auf die Zähne bzw. die Implantate aufgesetzt werden, die dem bzw. den fehlenden Zahn bzw. Zähnen benachbart sind.

In einem bevorzugten, nachfolgenden Arbeitsschritt wird an das Zwischen-Strukturelement des dentalen Modells Schlicker angelagert/abgeschieden, aus dem in wiederum nachfolgenden Arbeitsschritten das den fehlenden Zahn ersetzende Brückenzwischenglied entsteht.

Bevorzugt ist ein Verfahren, bei dem das hergestellte dentale Modell umfasst:
(i) zwei Stützstrukturelemente, die einen Abstand voneinander aufweisen, der dem Abstand zweier Zähne im Gebiss eines Patienten entspricht, zwischen denen mindestens ein Zahn zu überbrücken ist und
(ii) für jeden zu überbrückenden Zahn eine zwischen den Stützstrukturelementen befindliche Hohlstruktur, die auf ihrer Innenseite elektrisch leitfähig ist und die auf einem Modellträger befestigt ist, an dem auch die zwei Stützstrukturelemente befestigt sind.

Die Hohlstruktur kann aus zwei oder mehreren Seitenschalen gebildet sein. Günstigerweise ist die Hohlstruktur gegen die beiden Stützstrukturelemente elektrisch isoliert. Wird die Hohlstruktur in einem nachfolgenden Arbeitsgang unter Spannung gesetzt, so lagert sich Schlicker an der Innenfläche an und bildet eine Schlickerschicht, aus der in weiteren Arbeitsschritten die Verblendung oder das Gerüst für die Zwischenglieder entsteht. Die Innenfläche der Hohlstruktur weist eine Kontur auf, die so gestaltet ist, dass aus der Schlickerschicht durch nachfolgende Arbeitsschritte ein Dentalformteil mit den gewünschten geometrischen Abmessungen entsteht.

Werden die Stützstrukturelemente bereits beim Herstellen durch Rapid Prototyping erzeugt, so wird üblicherweise ein Zwischenstruktur-Element vorgesehen, das elektrisch leitfähige Substanz umfasst, so dass das Zwischenstruktur-Element in Bereichen seiner Oberfläche elektrisch leitfähig ist. Dieses Zwischen-Strukturelement kann ein individuell geformtes Plättchen oder einen Stab umfassen. Wird das Zwischen-Strukturelement im Laufe weiterer Verfahrensschritte entfernt (z. B. ausgeschmolzen), so existiert ein Hohlraum im entstanden Dentalformteil. Um dessen Festigkeit möglichst wenig zu beeinflussen, wird das Zwischen-Strukturelement so positioniert, dass der entstehende Hohlraum sich um die neutrale Faser des Dentalformteils herum befindet.

Alternativ können die Zwischen-Strukturelemente aber auch nach der Modellerzeugung nachträglich eingefügt werden. Verwendet werden kann beispielsweise eine Metallfolie, eine metallisch beschichtete Keramikfolie oder ein metallisch beschichtetes Papier, die mittels einer Halterung zwischen den Stützstrukturelementen eingesetzt werden.

Bei einer thermischen Behandlung des Modells in einem nachfolgenden Arbeitsschritt brennt ― je nach Materialwahl ― das Papier aus, die Keramikfolie verbleibt im Gerüst und das Metall brennt aus oder oxidiert zu einem Oxid und verbleibt als solches ebenfalls im Gerüst.

Um die geometrische Gestalt eines anhand des dentalen Modells (mit Zwischenstruktur-Element) in nachfolgenden Arbeitsschritten entstehenden Brückenzwischenglieds als ein Element eines Dentalformteils zusätzlich zu definieren, werden gegebenenfalls in einem definierten Abstand um das Zwischen-Strukturelement herum zusätzliche Berandungen aufgebaut. Beim Abscheiden von Schlicker in einem nachfolgenden Arbeitsschritt wird die aufwachsende Schlickerschicht durch diese Berandung begrenzt, sodass eine Nachbearbeitung entbehrlich wird.

In einem bevorzugten erfindungsgemäßen Verfahren wird das Rapid Prototyping so durchgeführt, dass das hergestellte dentale Modell in seinem Inneren eine höhere Porosität aufweist als in seinen Randbereichen. Um ein Ausschmelzen, Ausbrennen oder Zersetzen des dentalen Modells beim Sintern einer auf das dentale Modell aufgebrachten Keramikschicht zu verbessern, hat es sich als förderlich erwiesen, das dentale Modell in seinem Inneren mit einer höheren Porosität herzustellen als an seiner Oberfläche. Bei Erwärmung des dentalen Modells dehnt sich das Material zunächst aus. Zu einer weiteren Volumenänderung kommt es beim Phasenübergang fest/flüssig. Etwaige Volumenzunahmen werden von den Poren aufgefangen, sodass Risse in der auf dem dentalen Modell aufgebrachten Keramikschicht minimiert und sogar vermieden werden.

Bevorzugt ist ein Verfahren bei dem das hergestellte dentale Modell in einem oder mehreren Bereichen seines Volumens und damit seiner Oberfläche elektrisch leitfähig ist. Bei einem derartigen Modell wird ein elektrisch leitfähiger Teil der Oberfläche durch das mit diesem Teil verbundene Volumen elektrisch kontaktiert. Dadurch steht für die Leitung des elektrischen Stroms ein großer Querschnitt zur Verfügung, was zu einem geringen elektrischen Widerstand führt.

Bevorzugt ist ein Verfahren, bei dem die einzusetzenden fluiden, verfestigbaren Materialien (mit vorzugsweise einem Schmelzpunkt von unter 250 °C) lichtaushärtbar sind, wobei sie vorzugsweise aus der Gruppe ausgewählt sind, die aus lichtaushärtbaren Harzen und lichtaushärtbaren Wachsen besteht. In diesem Fall ist es möglich, das dentale Modell durch Stereolithographie herzustellen, bei der ein Photopolymer lagenweise aufgetragen und mittels UV-Licht ausgehärtet wird. Durch den Einsatz der elektrisch leitfähigen Substanz ist auch ein so hergestelltes dentales Modell in einem oder mehreren Bereichen seiner Oberfläche elektrisch leitfähig.

In einem bevorzugten Verfahren besteht das Photopolymerharz aus einem Monomer und einem Photoinitiator, der in dem Bereich der UV-LaserEmission absorbiert.

Die Aufgabe wird, wie oben bereits erwähnt, erfindungsgemäß des Weiteren gelöst durch ein dentales Modell der eingangs genannten Art, das nach einem vorstehend beschriebenen Verfahren herstellbar ist.

Die Aufgabe wird, wie ebenfalls oben bereits erwähnt, des weiteren gelöst durch ein Verfahren zum Herstellen eines dentalen Modells mit darauf abgeschiedener Keramikschicht.

Die abgeschiedene Keramikschicht ist noch im feuchten Zustand oder gegebenenfalls nach Trocknen gut und mit wenig Verschleiß an den eingesetzten Werkzeugen mechanisch zu bearbeiten. So lässt sich beispielsweise die Schichtdicke des Käppchens bzw. der Brücke nachträglich noch verändern (z.B. durch Fräsen) und es lassen sich Konturen aufbringen (z.B. durch zusätzliches Aufbringen von Schlicker, auch manuell). Darüber hinaus kann aber auch die Präparationskante korrigiert werden.

Günstig ist ein dentales Modell, das ein oder mehrere Materialien umfasst, die aus einem lichtaushärtbaren Material durch Lichtaushärten entstanden sind und/oder das in einem oder mehreren Bereichen seines Volumens und daraus resultierend seiner Oberfläche leitfähig ist.

Bevorzugt ist ein Verfahren zum Herstellen eines dentalen Modells mit darauf abgeschiedener Keramikschicht, in dem beim elektrophoretischen und/oder elektrolytischen Abscheiden der Keramikschicht auf einem oder mehreren elektrisch leitfähigen Bereichen der Oberfläche des hergestellten Modells zumindest zwei leitfähige Bereiche
(a) zu unterschiedlichen Zeitpunkten unter Spannung gesetzt und/oder spannungsfrei geschaltet werden und/oder
(b) auf voneinander verschiedene Spannungen gesetzt werden.

Erfindungsgemäß sind auch beliebige Kombinationen von Spannungen und Zeitdauern, während deren die Spannungen anliegen.

Dieses Verfahren eignet sich insbesondere zur Erzeugung von mehrgliedrigen Brücken. Bei der Erzeugung von Käppchen wird dagegen vorteilhaft nur eine elektrisch leitende Oberfläche verwendet.

Durch die Spannung und die Dauer, mit der die Spannung an das dentale Modell angelegt wird, lässt sich die Dicke der Keramikschicht, die während des elektrophoretischen und/oder elektrolytischen Abscheidens dem dentalen Modell aufwächst, empfindlich steuern. Dadurch, dass unterschiedliche Bereiche der Oberfläche zu unterschiedlichen Zeitpunkten unter Spannung gesetzt werden, auf unterschiedliche Spannungen und/oder für unterschiedlich lange Zeiten unter Spannung gesetzt werden, lassen sich an verschiedenen Stellen des dentalen Modells unterschiedlich dicke Keramikschichten abscheiden. Das ist insbesondere dann vorteilhaft, wenn für eine Brücke dickere Keramikschichten (insbesondere für Zwischenglieder) benötigt werden.

Die Aufgabe wird erfindungsgemäß, wie oben bereits erwähnt, zusätzlich gelöst durch ein Verfahren zum Herstellen eines Dentalformteils, mit folgenden Schritten:
- Herstellen eines dentalen Modells mit darauf abgeschiedener Keramikschicht nach einem der oben genannten Verfahren
- Bearbeiten des dentalen Modells mit darauf abgeschiedener Keramikschicht, so dass die Keramikschicht in ein Dentalformteil überführt wird.

Das Bearbeiten kann dabei z. B. ein Sintern, Herauslösen des Modells, Aufschlickern von Keramik, Auftragen eines Binders, Glasinfiltrieren und/oder ein spanendes Bearbeiten oder dergleichen sein. Ein Sintervorgang wird häufig mit einer Glasinfiltration kombiniert, z.B. kann die Festigkeit eines angesinterten Keramikteils durch Glasinfiltration erhöht werden.

Im Folgenden wird die Erfindung anhand der beigefügten Zeichnung und anhand eines Ausführungsbeispiels näher erläutert. In der Zeichnung zeigt:
- Fig. 1: eine Längsschnittansicht eines Dentalformteils,
- Fig. 2: ein dentales Modell,
- Fig. 3: das dentale Modell aus Figur 2 mit einer angelagerten Keramikschicht im Bereich des späteren Zwischenglieds,
- Fig.4: die schematische Darstellung eines dentalen Modells mit Präparationsabsatz und abgeschiedener Keramikschicht und
- Fig. 5: das dentale Modell aus Figur 3 mit einer angelagerten, durch-gehenden Keramikschicht.

Die Erfindung wird anhand der Herstellung eines Dentalformteils für eine dreigliedrige Brückenrestauration erläutert. Die Brückenrestauration umfasst ein Zwischenglied, das einen nicht mehr vorhandenen Zahn ersetzt, sowie zwei Glieder, die auf jeweils einen Stützzahn, d. h. einen ersten bzw. einen zweiten Stützzahn, aufgesetzt werden.

Zunächst wird vom Mundraum eines Patienten ein Abdruck genommen. Hierzu wird in der Regel eine Silikon-/, Alginat- oder Polyether-Abformmasse eingesetzt. Nach dem Abhärten der Abformmasse wird das entstandene Negativ mit Gips ausgegossen. Aus diesem Positiv wird das Meistermodell gefertigt. Das Meistermodell (nicht gezeigt) gibt im Rahmen der Abformgenauigkeit die Situation im Mund des Patienten vollständig wieder.

Aus diesem Meistermodell wird durch Scannen ein Datenmodell erstellt. Hierzu wird beispielsweise ein Linien-Scanner des Typs Speedscan der BEGO GmbH & Co. KG eingesetzt. Die so erhaltenen Scan-Daten werden an einen Rechner übermittelt und auf einem Bildschirm dargestellt. An diesem Datenmodell wird mittels entsprechender Software der Zahnersatz modelliert. Dies erfolgt mit einer Standardsoftware der BEGO GmbH & Co. KG (CAD-Software SOFTSHAPE). Anschließend wird die Geometrie des Datenmodells so vergrößert, dass ein im weiteren Verfahren auftretender Sinterschrumpf (z. B. eines Keramikkäppchens) kompensiert wird. Zusätzlich wird die Präparationslinie als Präparationskante im Datenmodell anmodelliert. Ebenfalls wird ein Zementspalt im Datenmodell anmodelliert. Der Zementspalt ist der Raum, der für die Zementierung der Käppchen auf den Zahnstümpfen erforderlich ist.

Anschließend wird die Porosität des dentalen Modells festgelegt. Dabei wird die Porosität im Inneren des dentalen Modells größer gewählt, während die Außenbereiche keine oder eine geringere Porosität aufweisen.

Die geometrische Gestalt der Keramikbrücke und deren Lage im Mundraum des Patienten sind nun rechnerisch erfasst und die Lage und Art des Zwischenglieds kann rechnerisch festgelegt werden. Es werden nun die Kräfte simuliert, die beim Einsatz einer entsprechenden Keramikbrücke im Mundraum zu erwarten sind. Hierzu werden in der Simulation typische Druck- und Scherkräfte auf die Oberfläche aufgebracht und mittels Finite-Element-Methode resultierende Kräfte in der Keramikbrücke und deren Oberfläche ermittelt. Dadurch werden die Stellen der Keramikbrücke ermittelt, an denen mit den höchsten Kräften zu rechnen ist. Dies gilt neben den Käppchen im Wesentlichen für das Zwischenglied. Anschließend wird errechnet, ob die Materialstärke an dem Zwischenglied und den Verbindern, aber auch an den Käppchen ausreichend ist, um die ermittelten Kräfte aufnehmen zu können. Ist dies nicht der Fall, wird das Datenmodell des Käppchens so verändert, dass die Materialstärke in diesem Punkt größer gewählt wird. Anschließend wird die geschilderte Simulationsrechnung mit dem veränderten Datenmodell erneut durchgeführt. Dieser iterative Prozess wird so lange durchgeführt, bis eine Geometrie der Keramikbrücke gefunden ist, welche die vorgegebene Festigkeit aufweist.

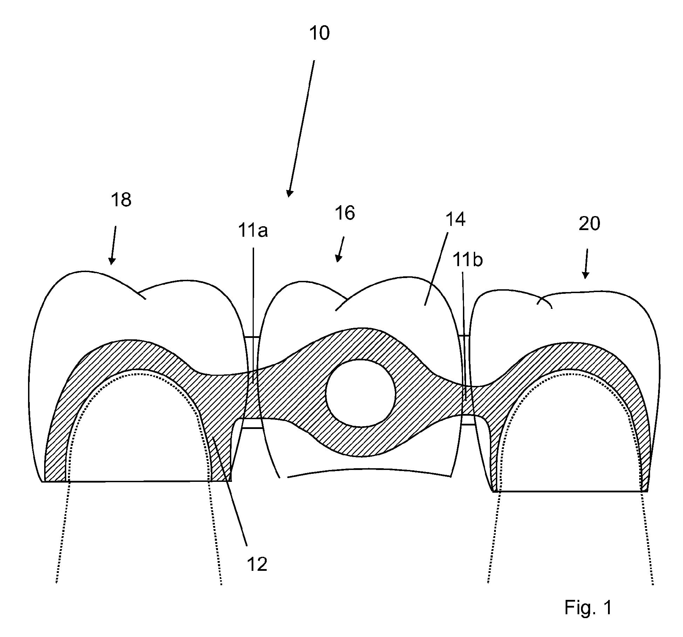

Nachdem durch die oben beschriebenen (rechnerischen) Schritte die geometrische Gestalt des geplanten Dentalformteils 10 (vgl. Fig. 1) festgelegt ist, wird in einem weiteren rechnerischen Schritt das Datenmodell des geplanten Dentalformteils, das auf Basis von STL-Daten vorliegt, und damit des im Rapid-Prototyping-Verfahren herzustellenden dentalen Modells so verändert, dass der Sinterschrumpf ausgeglichen wird. Anschließend werden (im vorliegenden Ausführungsbeispiel) drei elektrisch leitfähige Bereiche auf der Oberfläche des künftigen dentalen Modells und deren jeweilige Kontaktierung festgelegt.

Anschließend wird das Datenmodell dreidimensional auf einem 3D-Drucker des Typs T66 der Solidscape, Inc., Merrimack, USA durch ausgedruckt bzw. geprintet. Beim InkJet-Printen werden von einem Druckkopf kleine Kügelchen flüssigen Materials auf das entstehende Werkstück abgegeben, die dort erstarren und das dentale Modell aufbauen. Durch die Dichte der abgegebenen Kügelchen wird die Porosität des dentalen Modells dem Datenmodell entsprechend eingestellt.

Verwendet wird zur Herstellung des dentalen Modells (a) ein elektrisch isolierendes und (b) ein mit Rußpartikeln elektrisch leitfähig gemachtes Wachs. Im Ausführungsbeispiel wird als erstes Druckmaterial ein elektrisch nichtleitendes Wachs des Herstellers Solidscape eingesetzt. Dieses Wachs hat einen Schmelzpunkt von 54 bis 76 °C und ist nicht mit einer leitfähigen Substanz versehen. Als mit Rußpartikeln elektrisch leitfähig gemachtes Wachs wird Wachs des Herstellers Solidscape eingesetzt, das mit einem Massenverhältnis von 10:1 mit Ruß (Printex XE2, Degussa AG mit einer CTAB-Oberfläche von 600m²/g) gemischt wurde. Hieraus ergibt sich ein Wachs-Graphit-Gemisch mit einem spezifischen elektrischen Widerstand von ca. 1 Ωm. Es versteht sich, dass das leitfähige Wachs elektrisch leitende Bereiche des fertigen Dentalmodells definiert.

Figur 1 zeigt in der Längsschnittansicht ein fertiges Dentalformteil 10 einer dreigliedrigen Brücke. Das Dentalformteil 10 besteht aus einem Gerüst 12 und einer Verblendung 14. Ein Zwischenglied 16 liegt dabei zwischen einem ersten Eckglied 18 (in der Zeichnung links) und einem zweiten Eckglied 20 (in der Zeichnung rechts) und ist mit beiden durch Verbinder 11a, 11b verbunden. Das Eckglied 18 wird auf einen hier punktiert eingezeichneten (linken) Stützzahn, das Eckglied 20 auf einen ebenfalls punktiert eingezeichneten (rechten) Stützzahn aufgesetzt. Das Zwischenglied 16 ersetzt einen nicht mehr vorhandenen Zahn. Das Dentalformteil wurde nach dem im Folgenden beschriebenen Verfahren hergestellt.

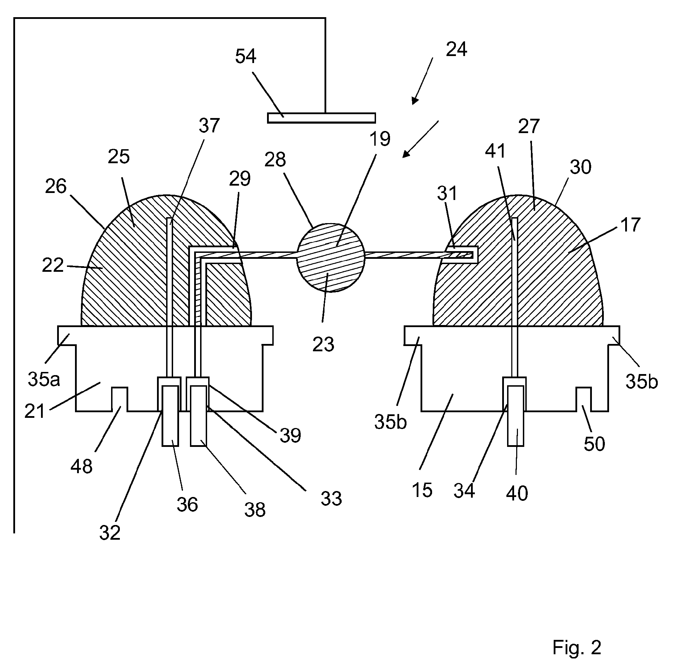

Figur 2 zeigt schematisch ein fertiges dentales Modell 24, das ein erstes Stützstrukturelement 25 im Bereich des linken Eckglieds 18 (vgl. Fig. 1) umfasst. Das Stützstrukturelement 25 wiederum umfasst einen ersten isolierenden Abschnitt 21 und einen elektrisch leitenden Abschnitt 22. Der isolierende Abschnitt 21 ist aus isolierendem Wachs, der leitende Abschnitt 22 aus leitendem Wachs ausgedruckt worden. Ein elektrisch leitfähiger Bereich 26 erstreckt sich entlang der Oberfläche des elektrisch leitenden Abschnitts 22. Die Stützstrukturelemente entsprechen in ihren Proportionen zumindest im Wesentlichen den Stümpfen der in Fig. 1 punktiert dargestellten Stützzähne.

Das dentale Modell 24 umfasst des Weiteren ein Zwischen-Strukturelement 19 in dem Bereich des Zwischenglieds 16 (vgl. Fig. 1). Ein elektrisch leitfähiger Bereich 28 erstreckt sich über die Oberfläche des Zwischen-Strukturelements 19.

Schließlich umfasst das dentale Modell 24 ein zweites Stützstrukturelement 17 im Bereich des rechten Eckglieds 20 (vgl. Fig. 1), das einen elektrisch leitenden Abschnitt 27 und einen elektrisch isolierenden Abschnitt 15 umfasst. Ein elektrisch leitfähiger Bereich 30 erstreckt sich über die Oberfläche des elektrisch leitenden Abschnitts 27.

Die elektrisch leitfähigen Bereiche sind 26, 28 und 30 sind Bereiche der Oberfläche der jeweils zugehörigen elektrisch leitenden Abschnitte 22, 23 und 27 und sind im vorliegenden Fall leitfähig aufgrund der Leitfähigkeit der elektrisch leitenden Abschnitte 22, 23 und 27 selbst. In einer alternativen Ausführungsform sind die Abschnitte 22, 23 und 27 nichtleitend und weisen an ihrer Oberfläche lediglich eine dünne Schicht elektrisch leitfähiger Substanz auf. Die Dicke der elektrisch leitfähigen Oberflächen-Bereiche 26, 28, 30 beträgt in diesem Fall ca. 0,2 mm bis 1 mm. In beiden Fällen weisen die elektrisch leitfähigen Bereiche 26, 28, 30 im Rahmen der Fertigungsgenauigkeit keine Porosität auf.

Die drei elektrisch leitfähigen Bereiche 26, 28 und 30 (in Fig. 2 durch unterschiedliche Schraffierungen kenntlich gemacht) sind gegeneinander elektrisch isoliert. Zwischen dem leitfähigen Bereich 26 und dem elektrisch leitfähigen Bereich 28 befindet sich eine elektrische Isolation 29, zwischen den elektrisch leitfähigen Bereichen 28 bzw. 30 befindet sich eine weitere elektrische Isolation 31.

Beim Ausdruck des dentalen Modells 24 werden aufgrund entsprechender Vorgaben aus dem Datenmodell, die dort in einem vorangegangenen Arbeitsschritt anmodelliert worden sind, Präparationskanten 35a, 35b, 35c, 35d vorgesehen. Zudem werden Löcher 32, 33, 34 in den isolierenden Abschnitten 15, 21 ausgespart, in die Passstifte bzw. Elektroden eingreifen. Im in Figur 2 gezeigten dentalen Modell 24 ist eine erste Elektrode 36 vorgesehen, die in das Loch 32 eingreift und den elektrisch leitfähigen Bereich 26 des Stützstrukturelements 25 über einen Leiter 37 kontaktiert. Eine zweite Elektrode 38 greift in das Loch 33 ein und kontaktiert über einen Leiter 39 den elektrisch leitfähigen Bereich 28 des Zwischen-Strukturelements 19 und eine dritte Elektrode 40 entsprechend kontaktiert den elektrisch leitfähigen Bereich 30 des Stützstrukturelements 17 über einen Leiter 41.

Das dentale Modell wird über hier nicht eingezeichnete Passstifte, von denen einer in eine Ausnehmung 48 und ein weiterer in eine Ausnehmung 50 greift, an einem ebenfalls nicht eingezeichneten Modellträger befestigt. Damit ist die Herstellung des dentalen Modells abgeschlossen.

Zur Herstellung eines Dentalformteils wird das an einem Modellträger befestigte dentale Modell 24 so in ein Schlickerbad getaucht, dass die Elektroden 36, 38, 40 nicht mit dem Schlicker in Berührung kommen.

Zwischen der zweiten Elektrode 38 und einer Schlickerbadelektrode 54, die das Schlickerbad kontaktiert, das hier nicht eingezeichnet ist, wird eine Spannung angelegt, so dass ein definierter Strom fließt. Als Schlicker wird im vorliegenden Fall eine stabilisierte Mischung aus Ethanol und Aluminiumoxidpulver verwendet. Als Verflüssigungsmittel bietet sich für Aluminiumoxid Polyarcrylsäure an, die eine hohe Partikelladung bewirkt und gleichzeitig die Funktion des Binders übernimmt.

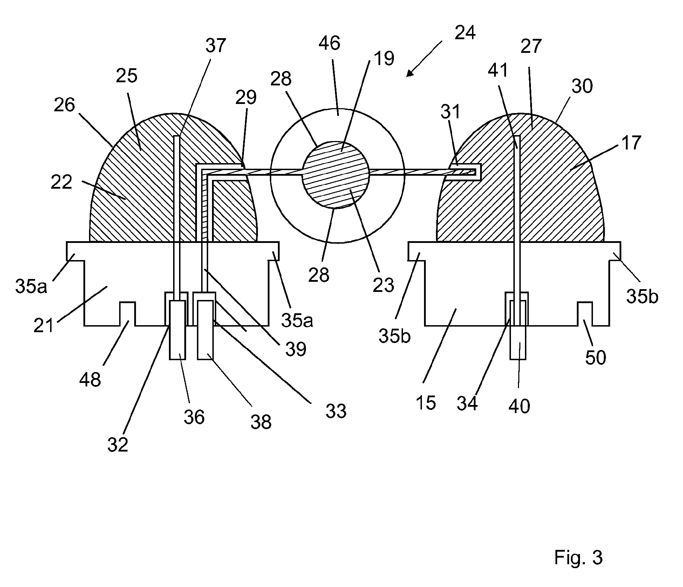

Durch das Anlegen der Spannung lagert sich am elektrisch leitfähigen Bereich 28 Schlicker an (Fig. 3). Die Schichtdicke hängt dabei insbesondere von der geflossenen elektrischen Ladung, dem gewählten Schlickermaterial und der Größe der Oberfläche des elektrisch leitfähigen Bereichs 28 ab. Die Schichtdicke der Schlickerschicht ist dabei an jeder Stelle des elektrisch leitfähigen Bereichs 28 gleich groß. Die Größe der Oberfläche wird aus dem Datenmodell berechnet. Die geflossene Ladung ergibt sich als Produkt aus dem gemessenen elektrischen Strom und der gemessenen Zeit, in der dieser Strom geflossen ist. Bei Kenntnis der Oberfläche und des elektrischen Stroms kann damit die Zeit berechnet oder zumindest abgeschätzt werden, nach der eine Keramikschicht der gewünschten Dicke abgeschieden ist. Diese Zeit beträgt bis zu wenigen Minuten. Nach dieser Zeit wird der Stromfluss unterbrochen. In Fig. 3 ist ein dentales Modell mit einer derartigen Keramikschicht 46 gezeigt.

Anschließend werden die beiden anderen elektrisch leitfähigen Bereiche 26, 30 zeitgleich kontaktiert und auf ihnen in der gleichen Weise Keramikschichten abgeschieden. Durch Zusammenwachsen der jeweiligen Keramikschichten entsteht eine einheitliche Keramikschicht, nämlich das spätere Gerüst.

Alternativ wird zunächst gleichzeitig auf sämtlichen elektrisch leitfähigen Bereichen 26, 28, 30 Keramik abgeschieden, wobei im Bereich 28 allerdings z. B. die Spannung länger angelegt bleiben kann, um eine besonders dicke Keramikschicht zu erzeugen.

Um die Schichtstärke und die Form der Keramikschicht nachträglich noch zu erhöhen bzw. zu verändern, kann zusätzlicher Schlicker von Hand aufgetragen werden. So erhält das Dentalformteil die gewünschte und charakteristische Form und gleichzeitig kommt es zu einer Erhöhung der zu ertragenden übertragenden Kraft.

Dadurch, dass im Bereich des Zwischenglieds kein Zahn vorhanden ist, der die Brücke abstützt, kommt es unter Kaubelastung in diesem Bereich im Normalfall zu einer stärkeren elastischen Verformung der Brückenrestauration. Um dies zu vermeiden, wird (wie ausgeführt) die Keramikschicht vor allem der Verbinder 11a, 11b stärker gewählt und dadurch die Verformung reduziert. Die beiden zuletzt abgeschiedenen Keramikschichten haben somit eine geringere Schichtdicke als die zuerst abgeschiedene.

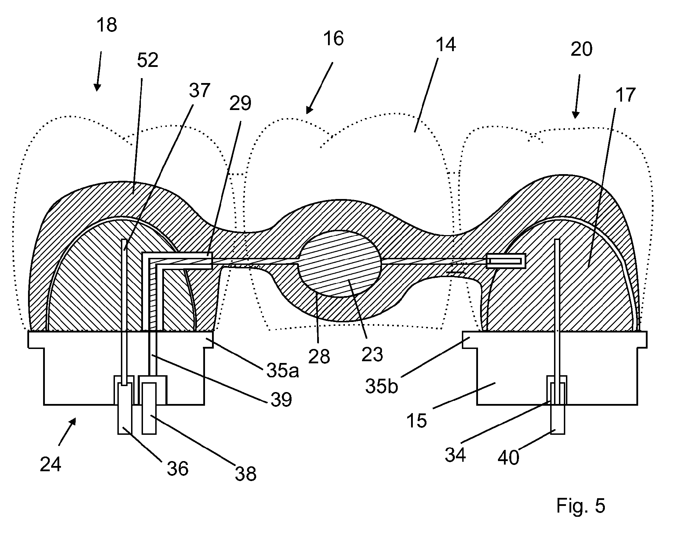

Die Keramikkäppchen besitzen im Bereich der Eckglieder 18 und 20 häufig eine Schichtdicke < 0,8 mm, die Keramik im Bereich des Zwischenglieds 16 ist hingegen in manchen Fällen mehrere Millimeter dick. Fig. 5 zeigt eine zusammengewachsene Keramikschicht 52 auf dem dentalen Modell 24 aus der im Verlauf der nachfolgenden Arbeitsschritte das Käppchen entsteht. Die zusammengewachsene Keramikschicht 52 weist dabei anders als in der Figur gezeigt, eine an jeder Stelle gleiche Schichtdicke auf.

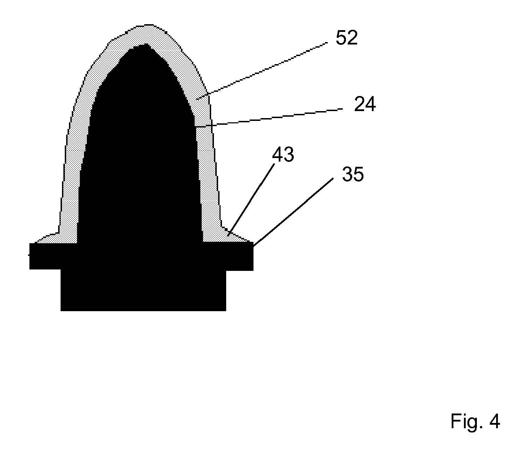

Das dentale Modell 24 samt der abgeschiedenen, zusammengewachsenen Keramikschicht 52 wird der Elektrophorese-Einrichtung entnommen. Der aus der zusammengewachsenen Keramikschicht 52 Grünling wird nachfolgend durch Fräsen nachbearbeitet. Dabei wird der keramische Grünkörper an der Präparationskante mit einem Fräser oder einem Schleifgerät definiert zurückgeschliffen. Fig. 4 zeigt schematisch ein dentales Modell 24 mit einer darauf abgeschiedenen Keramikschicht 52, die an einer Präparationskante 35 endet. Ein Überstand 43 wird zur Fertigbearbeitung abgetragen.

In den Figuren 2 und 3 sind Präparationskanten 35a, 35b für die Glieder des dort dargestellten Dentalmodells gezeigt. Präparationskanten (Präparationsgrenzen) lassen sich definiert und deutlich als Absatz herausziehen. Damit ist die Begrenzung des dentalen Formteils (z. B. Käppchens) in vertikaler Richtung optisch auch nach der Beschichtung zu erkennen. Unterhalb des Absatzes befindet sich, wie in Figur 4 gezeigt, der Fuß des Zahnstumpfs. Dieser Fuß des Stumpfes ist beispielsweise so dick, dass die Verlängerung der Fläche der resultierenden Oberfläche aus Schichtdicke und Stumpf entspricht. Wenn der Absatz bis zur unteren Oberfläche der Präparationskante 35 heruntergeschliffen wird, dann erfolgt gleichzeitig die definierte Bearbeitung des Käppchens in horizontaler Richtung.

Ein Dentalformteil (Käppchen bzw. Brücke) lässt sich zusammen mit dem Dentalmodell (z. B. Wachsmodell) maschinell bis zur benötigten Präparationslinie bearbeiten. Dazu wird das Datenfile vorzugsweise so bearbeitet, dass z. B. auf der Unterseite des Dentalmodells an definierten Stellen Löcher für z. B. Passstifte sind, oder die Unterseite so geformt wird, dass sie definiert in eine das Modell aufnehmende Form passt. Das so erzeugte dentale Modell kann dann zusammen mit der keramischen Schicht in einer Vorrichtung mit einem Fräser arretiert werden, der dann anhand bereits vorhandener Daten die Kontur nachfahren kann. Auf diesem Weg lässt sich zum Beispiel ein keramisches Abutment herstellen, das auf einem Implantat befestigt wird. Die Oberfläche der Verblendung wird dazu nach genau definierten Geometrien mittels Fräsen angelegt.

Der so fertig bearbeitete Grünling wird auf dem dentalen Modell im Ofen auf 150 °C erwärmt. Dies erfolgt in einem Pulverbett. Dabei trocknet der Grünling und das Wachs (mit einem Schmelzpunkt von 54 bis 76 °C schmilzt aus. Durch die beim Rapid Prototyping eingebrachte Porosität im Inneren des dentalen Modells können in Kombination mit dem Pulverbett Anrisse des Grünlings weitgehend vermieden werden. Nachfolgend wird der Grünling bei 1300 °C bis 1700 °C fertig gesintert, so dass ein fertiges Dentalformteil entsteht. Der dabei auftretende Sinterschrumpf wurde, wie oben beschrieben, bei der Erstellung des dentalen Modells berücksichtigt, sodass das entstandene Dentalformteil mit hoher Genauigkeit auf das Meistermodell passt.

Das Ausbrennen des Modells und das anschließende Sintern erfolgt vorzugsweise in einem Pulverbett. Stellt man das beschichtete Wachsmodell lediglich auf eine Ausbrennunterlage, dann kann es infolge des ungleichmäßigen Aufschmelzens und Ausbrennens des Modells zu Spannungen im Grünkörper kommen. Da dies jedoch der Zustand ist, in dem die keramische Schicht die niedrigste Festigkeit besitzt, kann es zu Rissen führen. Dies kann unterbunden werden, indem das elektrophoretisch beschichtete Modell in ein Pulverbett gegeben wird. Das führt dazu, dass es nicht infolge der Schwerkraft und dem ungleichmäßigen Wegbrennen des Modells, zu Spannungen und damit zu Zerstörungen kommt. Das Pulverbett hat also folgende Aufgaben: a) das Pulverbett trägt das Bauteil gleichmäßig b) das Pulverbett saugt das Wachs auf bzw. führt ihn besser weg.

Eine Möglichkeit, die Festigkeit der keramischen Schicht zu erhöhen, damit sie den Verfahrensschritt des thermischen Herauslösens des Modells unbeschadet übersteht, ist die Verwendung eines Bindemittels. Dies kann bereits dem Schlicker hinzugesetzt werden, oder es wird vorzugsweise auf das getrocknete Gerüst gegeben.

Ausführungsbeispiel: Herstellung eines Käppchens bzw. einer Krone (Dentalformteil)

Es wird ein Meistermodell einer Einzelzahnpräparation bereitgestellt. Dieses wird eingescannt und die erhaltenen Daten werden am PC verarbeitet. Dabei wird das Volumen des zu erzeugenden Modells entsprechend der Volumenabnahme beim Sintern vergrößert, d. h. der Sinterschrumpf kompensiert. Ein Zementspalt wird bei der Auslegung der erforderlichen Geometrie berücksichtigt, der für die Zementierung der Käppchen auf den Zahnstümpfen erforderlich ist. Darüber hinaus wird die Präparationslinie deutlich als Präparationskante herausgezogen.

Das Datenmodell wird so ausgestaltet, dass beim Rapid Prototyping eine dichte, 0,2 mm dicke Oberfläche des Dentalmodells gebildet wird, wohingegen das innere Volumen des Dental modells als poröse Stützstruktur aufgebaut wird. Das Datenmodell auf Basis von STL-Daten wird dann über den Rapid-Prototyping (printing)-Prozess in ein dentales Modell umgesetzt. Hierzu werden (a) ein elektrisch isolierender und (b) ein mit Rußpartikeln elektrisch leitfähig gemachtes Wachs, wie sie oben beschrieben sind, eingesetzt. Die Bereiche werden vom Präparationsrand begrenzt.

Alternativ wird das dentale Modell durch Stereolithographie aus dem Datenmodell hergestellt. Hierbei werden jeweils ein elektrisch leitfähiges Polymer lagenweise aufgetragen und mittels UV-Licht ausgehärtet. Hierzu wird z. B. ein Gerät der Firma 3d-Systems des Typs SLA 7000 eingesetzt.

Der elektrisch leitende Bereich des fertiggestellten Dentalmodells wird kontaktiert und zusammen mit einer Gegenelektrode in ein Schlickerbad getaucht, das aus dem oben beschriebenen Schlicker besteht.

Nach Anlegen von Spannung ist eine Keramikschicht in Abhängigkeit von der erwünschten Schichtdicke und dem eingestellten Stromfluss bzw. der Spannung nach wenigen Sekunden bis hin zu einigen Minuten fertig abgeschieden.

Der so erzeugte keramische Grünkörper wird zusammen mit dem dentalen Modell getrocknet. Der keramische Grünkörper des Käppchens wird an der Präparationskante mit einem Fräser oder einem Schleifgerät definiert zurückgeschliffen. Zur Veränderung der Kontur kann gegebenenfalls zusätzlicher Schlicker aufgetragen werden. Anschließend erfolgt das thermische Heraustrennen des Modells. Dies erfolgt bereits bei Temperaturen zwischen 54 und 76 °C , da hier bereits der Schmelzpunkt des Wachses erreicht wird. Reste des Wachses, die infolge der Benetzung nicht herausgeflossen sind, verbrennen bei der weiteren Temperaturerhöhung rückstandsfrei. Alternativ kann das Modell chemisch herausgelöst werden.

Das Sintern des Grünkörpers erfolgt bei Temperaturen von 1300 °C bis 1700 °C. Die Keramikpartikel des Grünkörpers sintern zusammen, so dass es zur Volumenabnahme kommt. Diese Volumenabnahme wurde zuvor berücksichtigt, siehe oben. Das Keramikgerüst wird beispielsweise dichtgesintert oder angesintert. Zur Festigkeitssteigerung wird zusätzlich Glas infiltriert.

Das erhaltene Keramikkäppchen bzw. die erhaltene Krone (dentale Formteil) passt mit hoher Genauigkeit auf das Meistermodell und damit auf die Zahnpräparation. Es besitzt eine hohe Dichte von über 90 % und weist deshalb eine hohe Festigkeit auf. Es kann nicht und wird nicht mit Glas nachinfiltriert werden.

Alternativ zum beschriebenen Dichtsintern des Keramikkäppchens (dentalen Formteils) bei hohen Temperaturen kann der Grünkörper bei Temperaturen zwischen 1000 und 1300°C angesintert werden. Damit verbunden ist eine nur geringe Volumenabnahme aber auch eine verbleibende hohe Porosität. Diese Porosität kann in einem nachgeschalteten Schritt durch Glasinfiltrieren aufgefüllt werden. Da die Volumenabnahme nur gering ist, wird bei dieser alternativen Vorgehensweise das Volumen des zu erzeugenden Dentalmodells auch nur geringfügig gegenüber dem des Meistermodells vergrößert.

## Patentansprüche

1. Verfahren zum Herstellen eines dentalen Modells (24) mit folgenden Schritten:
- Bereitstellen eines oder mehrerer fluider, verfestigbarer Materialien sowie einer oder mehrerer elektrisch leitfähiger Substanzen
- Herstellen des dentalen Modells (24) durch Rapid Prototyping unter Verwendung des oder der fluiden, verfestigbaren Materialien und der einen oder der mehreren elektrisch leitfähigen Substanzen, so dass das hergestellte dentale Modell in einem oder mehreren Bereichen (26, 28, 30) seiner Oberfläche elektrisch leitfähig ist.

2. Verfahren nach Anspruch 1, **dadurch gekennzeichnet, dass** das dentale Modell (24) durch additives Rapid Prototyping, insbesondere durch Stereolithographie und/oder 3D-Drucken wie Inkjet-Modelling und/oder Fused Deposition Modelling der fluiden, verfestigbaren Materialien und der elektrisch leitfähigen Substanzen hergestellt wird.

3. Verfahren nach einem der vorstehenden Ansprüche, **dadurch gekennzeichnet, dass** das fluide, verfestigbare Material oder die fluiden, verfestigbaren Materialien aus der Gruppe ausgewählt ist bzw. sind, die aus Wachs und Kunststoff besteht.

4. Verfahren nach einem der vorstehenden Ansprüche, **dadurch gekennzeichnet, dass** als elektrisch leitfähige Substanzen Graphit, Ruß und/oder Metallpartikel, insbesondere Silberpartikel verwendet werden.

5. Verfahren nach einem der vorstehenden Ansprüche, **dadurch gekennzeichnet, dass** zumindest eine elektrisch leitfähige Substanz mit zumindest einem fluiden, verfestigbaren Material vor deren Verwendung beim Rapid Prototyping gemischt wird.

6. Verfahren nach einem der vorstehenden Ansprüche, **dadurch gekennzeichnet, dass** das hergestellte dentale Modell (24) in mindestens zwei gegeneinander elektrisch isolierten Bereichen (26, 28, 30) seiner Oberfläche elektrisch leitfähig ist.

7. Verfahren nach einem der vorstehenden Ansprüche, **dadurch gekennzeichnet, dass** zumindest eine elektrisch leitfähige Substanz ein fluides, verfestigbares Material ist.

8. Verfahren nach einem der vorstehenden Ansprüche, **dadurch gekennzeichnet, dass** zum Rapid Prototyping geometrische Daten des dentalen Modells (Datenmodell) verwendet werden, die durch intraorales Scannen, durch Scannen eines Arbeitsmodells oder durch Scannen eines Meistermodells gewonnen werden.

9. Verfahren nach einem der vorstehenden Ansprüche, **dadurch gekennzeichnet, dass** das Datenmodell vor dem Herstellen des dentalen Modells verändert wird, so dass ein überdimensioniertes dentales Modell resultiert, um die zu erwartende Dimensionsänderung eines durch Abformen des dentalen Modells entstehenden Dentalformteilrohlings während dessen Herstellungsprozess zu kompensieren.

10. Verfahren nach einem der Ansprüche 8 oder 9, **dadurch gekennzeichnet, dass** das Datenmodell vor dem Herstellen des dentalen Modells auf Basis einer numerischen Berechnung der lokalen Versagenswahrscheinlichkeit eines durch Abformen des dentalen Modells entstehenden Dentalformteilrohlings, insbesondere durch eine FEM- Simulation, so verändert wird, dass eine vorgewählte lokale Versagenswahrscheinlichkeit an keinem Ort des entstehenden Dentalformteilrohlings überschritten wird.

11. Verfahren nach einem der Ansprüche 8 bis 10, **dadurch gekennzeichnet, dass** das Datenmodell vor dem Herstellen des dentalen Modells so verändert wird, dass nach Herstellen durch Rapid Prototyping ein dentales Modell resultiert, das
(i) an einer Stelle einen Vorsprung aufweist, die einer Stelle entspricht, an der das dentale Modell eine Präparationskante (35a, 35b,35c, 35d) aufweist und/oder
(ii) das eine oder mehrere Ausnehmungen (48, 50) oder Erhebungen zur Aufnahme von Befestigungsmitteln zur Befestigung des dentalen Modells (24) an einem Modellträger aufweist.

12. Verfahren nach einem der vorstehenden Ansprüche, **dadurch gekennzeichnet, dass** das hergestellte dentale Modell (24) umfasst:
(i) zwei Stützstrukturelemente (17, 25), die einen Abstand voneinander aufweisen, der dem Abstand zweier Zähne im Gebiss eines Patienten entspricht, zwischen denen mindestens ein Zahn zu überbrücken ist und
(ii) für jeden zu überbrückenden Zahn ein zwischen den Stützstrukturelementen (17, 25) befindliches, frei tragendes Zwischen-Strukturelement (19), das gegenüber den Stützstrukturelementen elektrisch isoliert ist.

13. Verfahren nach einem der vorstehenden Ansprüche, **dadurch gekennzeichnet, dass** das hergestellte dentale Modell umfasst:
(i) zwei Stützstrukturelemente, die einen Abstand voneinander aufweisen, der dem Abstand zweier Zähne im Gebiss eines Patienten entspricht, zwischen denen mindestens ein Zahn zu überbrücken ist und
(ii) für jeden zu überbrückenden Zahn eine zwischen den Stützstrukturelementen befindliche Hohlstruktur, die auf ihrer Innenseite elektrisch leitfähig ist und die auf einem Modellträger befestigt ist, an dem auch die zwei Stützstrukturelemente befestigt sind.

14. Verfahren nach einem der vorstehenden Ansprüche, **dadurch gekennzeichnet, dass** das Rapid Prototyping so durchgeführt wird, dass das hergestellte dentale Modell (24) in seinem Inneren eine höhere Porosität aufweist als in seinen Randbereichen.

15. Verfahren nach einem der vorstehenden Ansprüche, **dadurch gekennzeichnet, dass** das hergestellte dentale Modell (24) in einem oder mehreren Bereichen seines Volumens und seiner Oberfläche elektrisch leitfähig ist.

16. Verfahren nach einem der vorstehenden Ansprüche, **dadurch gekennzeichnet, dass** die fluiden, verfestigbaren Materialien lichtaushärtbar sind, wobei sie vorzugsweise aus der Gruppe ausgewählt sind, die aus lichtaushärtendem Harz und lichtaushärtbarem Wachs besteht.

17. Dentales Modell, umfassend ein oder mehrere verfestigte Materialien, sowie in einem oder mehreren Bereichen seiner Oberfläche eine oder mehrere elektrisch leitfähige Substanzen, **dadurch gekennzeichnet, dass** es nach einem Verfahren gemäß einem der vorstehenden Ansprüche herstellbar ist.

18. Verfahren zum Herstellen eines dentalen Modells mit darauf abgeschiedener Keramikschicht, mit folgenden Schritten:
- Herstellen eines in einem oder mehreren Bereichen seiner Oberfläche elektrisch leitfähigen Modells (24) durch Rapid Prototyping nach einem Verfahren nach den Ansprüchen 1-15,
- elektrophoretisches und/oder elektrolytisches Abscheiden einer Keramikschicht auf einem oder mehreren elektrisch leitfähigen Bereichen (26, 28, 30) der Oberfläche des hergestellten Modells (24).

19. Verfahren nach Anspruch 18, **dadurch gekennzeichnet, dass** beim elektrophoretischen und/oder elektrolytischen Abscheiden der Keramikschicht auf einem oder mehreren elektrisch leitfähigen Bereichen der Oberfläche des hergestellten Modells zumindest zwei leitfähige Bereiche
(a) zu unterschiedlichen Zeitpunkten unter Spannung gesetzt und/oder spannungsfrei geschaltet werden und/oder
(b) auf voneinander verschiedene Spannungen gesetzt werden.

20. Verfahren zum Herstellen eines Dentalformteils (10), mit folgenden Schritten:
- Herstellen eines dentalen Modells (24) mit darauf abgeschiedener Keramikschicht (46; 52) nach einem der Ansprüche 18 oder 19,
- Bearbeiten des dentalen Modells (24) mit darauf abgeschiedener Keramikschicht (46; 52), so dass die Keramikschicht in ein Dentalformteil überführt wird.

21. Verwendung eines 3D-Druckers mit einem, zwei oder mehr Drucksystemen, zum Ausdruck eines dentalen Modells, das ein oder mehrere verfestigte Materialien umfasst und das in einem oder mehreren Bereichen (26, 28, 30) seiner Oberfläche eine oder mehrere elektrisch leitfähige Substanzen umfasst.

22. Verwendung eines Kits, umfassend ein oder mehrere
(i) fluide, verfestigbare oder
(ii) fluidisierbare und wiederverfestigbare Materialien und eine oder mehrere elektrisch leitfähige Substanzen, zum Einsatz in einem Rapid-Prototyping-Verfahren nach einem der Ansprüche 1-15.
